# EUROPEAN PATENT APPLICATION

(11) **EP 4 586 423 A1**
(43) Date of publication of application: **16.07.2025**
(21) Application number: 24151894.3
(22) Date of filing: 15.01.2024
(51) Int. Cl.: H02G 1/14, H02G 15/064

(54) **HVDC CABLE ACCESSORIES BASED ON THERMOPLASTIC ELASTOMERS**

(71) Applicant: NKT HV Cables AB, 371 60 Lyckeby (SE)
(72) Inventor: UNGE, Mikael, Västerås (SE); NILSSON, Susanne, Göteborg (SE); HEDENQVIST, Mikael, Solna (SE)
(74) Representative: Kransell & Wennborg KB

(57) **Abstract**

There is provided an HVDC cable accessory comprising an electric stress control layer which at one position is adapted to be connected to a high voltage direct current cable wherein the electric stress control layer comprises a thermoplastic elastomer.

## Description

### TECHNICAL FIELD

The present disclosure relates to the field of high voltage direct current (HVDC) cable accessories and in particular to the interface between an HVDC cable accessory and an HVDC cable.

### BACKGROUND

High voltage direct current (HVDC) cables are advantageous to use as they have the ability to transmit large-capacity power over a long distance while simultaneously having a smaller power loss and higher stability than alternating current power cables.

Installation of the HVDC cables requires termination of the cable via cable terminations and often also require connection of multiple cables due to e.g. long distances via cable joints.

During the connection of HVDC cables to cable accessories such as cable joints or cable terminations, the outer layers of the HVDC cable including the semi-conductive screen are typically removed at the position where the cable is joined or terminated (the interface between the cable and the accessory) in order to facilitate the connection. The semi-conductive screen ensures that the electric field which is generated by the conductor is contained within the conductor insulation of the HVDC cable. Once the semi-conductive screen is removed, a strong electric field is formed at the screen edge. If the electric field is not mitigated, it may cause damage to the insulation layer of the HVDC cable and lead to electrical breakdown. In order to prevent the damage, the electrical field might cause, cable joints and terminations are equipped with a stress control layer, e.g. a rubber body. The stress control layer reduces the electric field stress at the interface between the cable and the accessory to an acceptable level thus preventing partial discharge and insulation problems.

When the HVDC cable systems are assembled on site in the field rather than at the factory, the stress control layer is typically composed of elastomers such as silicone rubber, EPDM or EPR. These HVDC cable systems, therefore, only rely on that sufficient pressure is achieved in order to obtain a good dielectric interface between the HVDC cable and its accessory. These interfaces are thus potential weak links in an HVDC cable system.

### SUMMARY

Facing the above issues with the existing HVDC cable systems, the present inventors realized that there is a need to improve the electrical breakdown strength of an HVDC cable system that is assembled on site rather than in a factory. Furthermore, the inventors hypothesized that the electrical breakdown strength of the system may be enhanced by improving the interface between an HVDC cable and its accessories.

Therefore, according to a first aspect, there is provided an HVDC cable accessory comprising an electric stress control layer which at one position is adapted to be connected to an HVDC cable and wherein the electric stress control layer comprises a thermoplastic elastomer (TPE).

The HVDC cable may comprise a conductor and an insulation layer wherein the electric stress control layer is connected to the insulation layer of the HVDC cable.

By using a TPE instead of an elastomer in the electric stress control layer, it is possible to improve the dielectric interface between the HVDC cable and the HVDC cable accessory by heat-treating the interface. Heat-treatment enables the TPE to melt together with the insulation of the HVDC cable. The dielectric interface would thus not only rely on achieving adequate pressure but also entanglement between the polymer chains in the TPE in the electric stress control layer and in the insulation layer of the HVDC cable. The improved dielectric interface leads to enhanced electrical breakdown strength of the HVDC cable system. The HVDC cable accessory is preferably prefabricated. This allows the accessory to be used when an HVDC cable system is installed on site rather than in a factory.

The electric stress control layer may comprise a stress cone.

Furthermore, the HVDC cable accessory may be an HVDC cable termination or an HVDC cable joint.

The electric stress control layer may comprise at least 80 wt.% TPE based on the total dry weight of the electric stress control layer. This enables an especially good interface as it allows a sufficient amount of the electric stress control layer to melt together with the insulation layer of the HVDC cable.

The electric stress control layer may further comprise polymers, other than the TPE, such as polyolefins and polycarbonates, as well as additives such as nitrides, metal oxides, cross-linking agents and/or carbon-based additives.

The TPE may have a peak melting point in the range of 100-180 °C as determined according to ISO 11357-1:2023 and/or a melt index in the range of 0.05-30 g/10 min (5 kg at 190 °C) as determined according to ASTM D1238-23a. This aids the formation a more homogenous melt with the insulation layer of the HVDC cable and improves the dielectric interface.

The TPE may be polyolefin-based. This enables better compatibility with the insulation layer of the HVDC cable which typically comprises LDPE, such as XLPE.

The polyolefin-based TPE may be an ethylene copolymer, such as an ethylene block copolymer. Preferably, the ethylene copolymer is an ethylene/1-olefin copolymer such as an ethylene/1-olefin block copolymer. More preferably, the ethylene/1-olefin copolymer is an ethylene/1-octene copolymer, such as an ethylene/1-octene block copolymer. These TPEs are highly compatible with the insulation layer of the HVDC cable and have particularly suitable properties for use in the electric stress control layer.

The HVDC cable accessory may furthermore comprise an insulation layer arranged around the electric stress control layer. Additionally, the HVDC cable accessory may comprise a semi-conducting layer arranged around the electric stress control layer and/or arranged around the insulation layer of the HVDC cable accessory if present.

The electric stress control layer may further comprise at least one field grading material (FGM) layer. The FGM layer is adapted to be connected to an HVDC cable. This enables a better field grading ability of the HVDC cable accessory, and a reduction of the electric field stress may be obtained. The at least one FGM layer comprises the TPE and, preferably fillers.

According to a second aspect, an HVDC cable system is provided. The HVDC system comprises:
- at least one HVDC cable comprising a conductor and an insulation layer arranged around the conductor; and
- an HVDC cable accessory according to the first aspect;
wherein the electric stress control layer is in direct contact, in at least one position, with the insulation layer of the HVDC cable.

The system according to the second aspect has a higher and more robust breakdown strength.

According to a third aspect, a method for installing an HVDC cable system is provided. The method comprises the steps:
a) providing at least one HVDC cable comprising a conductor and an insulation layer arranged around the conductor;
b) providing an HVDC cable accessory according to the first aspect;
c) joining the HVDC cable and the HVDC cable accessory wherein the electric stress control layer is in direct contact, in at least one position, with the insulation layer of the HVDC cable and an interface between the insulation layer of the HVDC cable and the electric stress control layer is obtained; and
d) heating the interface between the insulation layer of the HVDC cable and the electric stress control layer to obtain a melted interface.

By applying the method according to the third aspect, an HVDC cable system having a higher and more robust electrical breakdown strength is obtained.

The HVDC cable may further comprise a semi-conductive screen which is removed from the HVDC cable prior to step c), in at least the position where the electric stress control layer is in direct contact with the insulation layer of the HVDC cable.

The joining in step c) is preferably performed by pushing the HVDC cable into the HVDC accessory. Thus, a mechanical force is applied, and an improved interface may be obtained.

The HVDC accessory may be a cable joint. Preferably, at least two HVDC cables are provided in step a) and a connected HVDC cable system is obtained in step d).

The heat in step d) may be provided as induction heating and/or heatmaps.

### BRIEF DESCRIPTION OF THE DRAWINGS

Aspects and embodiments are now described, by way of example, with reference to the accompanying drawings, in which:
Fig 1 shows a schematic longitudinal sectional view of an installed HVDC cable joint (i.e., installed with an HVDC cable on site) provided with an electric stress control layer.
Fig 2 shows a schematic longitudinal sectional view of an installed HVDC cable termination (i.e. installed with a HVDC cable on site) provided with an electric stress control layer.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of the disclosure to those skilled in the art. Like numbers refer to like elements throughout the description.

In certain instances, the HVDC cable systems comprising cables, joints and/or terminations need to be assembled on site in the field rather than in a factory. The assembly of an HVDC cable accessory to an HVDC cable is usually performed using mechanical force. These systems only rely on that sufficient pressure is achieved in order to obtain a good dielectric interface between the HVDC cable and HVDC cable accessory. The present disclosure provides an HVDC cable accessory that enables heat-treatment of the surfaces forming the dielectric interface between the HVDC cable and HVDC cable accessory. The heat-treatment, in addition to the mechanical force, enables a better dielectric interface and hence improves the electrical breakdown strength of the HVDC cable system.

The first aspect of the present disclosure provides an HVDC cable accessory comprising an electric stress control layer which at, at least one position, is adapted to be in contact with an HVDC cable and wherein the electric stress control layer comprises a TPE. Hence, the electric stress control layer is adapted to be arranged around and in direct contact with the HVDC cable, preferably in direct contact with the insulation layer of the HVDC cable. The direct contact gives rise to a dielectric interface between the electric stress control layer and the HVDC cable.

Using a TPE in the electric stress control layer enables the possibility to heat-treat the dielectric interface formed between the insulation layer of the cable and the electric stress control layer. The heat-treatment melts together the thermoplastic part of the TPE and the insulation layer of the HVDC cable, forming a uniform interface. The electrical breakdown strength of the dielectric interface is, thereby, improved and thus also the electrical breakdown strength of the entire HVDC cable system.

Preferably, the electric stress control layer comprises at least 80 wt.% of the TPE based on the total dry weight of the electric stress control layer, more preferably at least 90 wt.% based on the total dry weight of the electric stress control layer. This amount of TPE in the electric stress control layer enables an especially good interface as it allows a sufficient amount of the electric stress control layer to melt together with the insulation layer of the HVDC cable. The electric stress control layer may comprise up to 100 wt.% TPE based on the total dry weight of the electric stress control layer.

The electric stress control layer may further comprise polymers, other than the TPE, such as polyolefins and polycarbonates, as well as additives such as nitrides, metal oxides, cross-linking agents and/or carbon-based additives. Specific examples of additives may be boron nitride, aluminium nitride, ZnO, MgO, Al₂O₃, graphene, graphene-oxide and carbon black.

A TPE is a polymer that has both elastic and thermoplastic properties. These materials combine rubber-like properties with the ability to be processed like plastics. Thus, using a TPE instead of an elastomer in the electric stress control layer enables rubber-like properties while being able to be processed, e.g., heat-treated.

The heat-treatment of the dielectric interface may be improved by choosing a TPE having a peak melting point and/or a melt index similar to the insulation layer of the HVDC cable. A similar melting point and/or melt index enables the formation of a more uniform melt between the electric stress control layer and the insulation layer of the HVDC cable. Hence, a peak melting point in the range of 100-150 °C as determined according to ISO 11357-1:2023 and/or a melt index in the range of 0.05-30 g/10 min (5 kg at 190 °C) as determined according to ASTM D1238-23a is preferred.

The TPE preferably has a low crystallinity. The crystallinity is preferably in the range of 5-30 %, more preferably in the range of 10-20 % as determined by ISO 11357-1:2023. The low crystallinity gives rise to a TPE having particularly good rubber elasticity.

The insulation layer of an HVDC cable typically comprises LDPE such as XLPE. It is therefore, preferred that the TPE in the electric stress control layer is a polyolefin-based polymer, more preferably a polyolefin-based block copolymer. Polyolefin-based block copolymers are polyolefins having alternating blocks of ridged, crystalline, "hard" segments and elastomeric, "soft" segments. The alternating block structure gives the polyolefin block copolymers a good flexibility compared to random polyolefin copolymers.

The polyolefin copolymer may be an ethylene copolymer, preferably a block copolymer. Ethylene may be copolymerized with a 1-olefin, such as 1-octene, forming an ethylene/1-olefin, such as an ethylene/1-octene copolymer. The copolymer is preferably a block copolymer. This enables a TPE having particularly suitable properties for use in the electric stress control layer while simultaneously being compatible with the insulation layer of the HVDC cable.

For the preferred, ethylene/1-octene block copolymer, the hard segments typically comprise a low molar concentration of 1-octene while the soft segments comprise a high molar concentration of 1-octene.

The TPE may be synthesized or bought. Suitable commercial TPEs may be Infuse^{™} Olefin Block Copolymers from DOW.

In addition to the electric stress control layer, the HVDC cable accessory may further comprise an insulation layer arranged around the electric stress control layer. The HVDC cable accessory may also comprise a semi-conducting layer arranged around the electric stress control layer and/or arranged around the insulation layer of the HVDC cable accessory if present. The semi-conducting layer and/or the insulation layer of the HVDC cable accessory may comprise a TPE, preferably the same TPE as in the electric stress control component. The semi-conductive layer preferably also comprises fillers.

The electric stress control layer may further comprise at least one FGM layer. The FGM layer is adapted to be connected to an HVDC cable. Preferably, the FGM layer is arranged around the HVDC cable, more preferably around the insulation layer of the HVDC cable. This enables a better field grading ability of the HVDC cable accessory, and a reduction of the electric field stress. The FGM layer comprises the TPE. In addition to the TPE, the FGM layer may further comprise fillers such as SiC, ZnO and/or graphene oxide.

The HVDC cable accessory may be an HVDC cable termination or an HVDC cable joint.

According to a second aspect, an HVDC cable system is provided. The HVDC system comprises:
- at least one HVDC cable comprising a conductor and an insulation layer arranged around the conductor; and
- an HVDC cable accessory according to the first aspect;
wherein the electric stress control layer at one position is in direct contact with the insulation layer of the HVDC cable.

The system according to the second aspect has a higher and more robust breakdown strength.

The HVDC cable typically also comprises a semi-conductive screen arranged around the insulation layer of HVDC cable. This semi-conductive screen is removed from the HVDC cable in at least the position where the electric stress control layer is in direct contact with the insulation layer of the HVDC cable prior to step c). The semi-conductive screen is typically removed from the majority of the HVDC cable that is within the HVDC cable accessory during installation to facilitate the connection between the HVDC cable and the HVDC cable accessory.

The HVDC cable may further comprise other layers such as, but not limited to, further semi-conductive layers, water blocking tapes and outer layers.

According to a third aspect, a method for installing an HVDC cable system is provided. The method comprises the steps of:
a) providing at least one HVDC cable comprising a conductor and an insulation layer arranged around the conductor;
b) providing a prefabricated HVDC cable accessory according to the first aspect;
c) joining the HVDC cable and the HVDC cable accessory wherein the electric stress control layer is in direct contact in at least one position with the insulation layer of the HVDC cable and an interface between the insulation layer of the HVDC cable and the electric stress control layer is obtained; and
d) heating the interface between the insulation layer of the HVDC cable and the electric stress control layer to obtain a melted interface.

In step c) the HVDC cable and the HVDC cable accessory are joined such that the electric stress control layer is arranged around the insulation layer of the cable when assembled. This is preferably obtained by pushing the HVDC cable into the HVDC cable accessory. The pushing generates a mechanical force with applies pressure to the system and forms the interface between the HVDC cable and the electric stress control layer.

By applying the method according to the third aspect, an HVDC cable system having a higher and more robust electrical breakdown strength is obtained.

Once the HVDC cable and the HVDC cable accessory are assembled and an interface is formed between the insulation layer of the HVDC cable and the electric stress control layer, heat is applied to the interface. The heating may be provided by e.g. induction heating and/or via external means such as heatmaps (e.g., using a mat comprising heating elements). Heating is applied until a melt of the electric stress control layer and the insulation layer of the HVDC cable is formed and the two layers have, at least partially, merged into each other.

The HVDC cable accessory may be a cable termination and thus a terminated cable may be obtained in step d).

The HVDC cable accessory in step b) may be a prefabricated HVDC accessory.

The HVDC accessory may be a cable joint. Preferably, at least two HVDC cables are then provided in step a) and a connected HVDC cable system is obtained in step d).

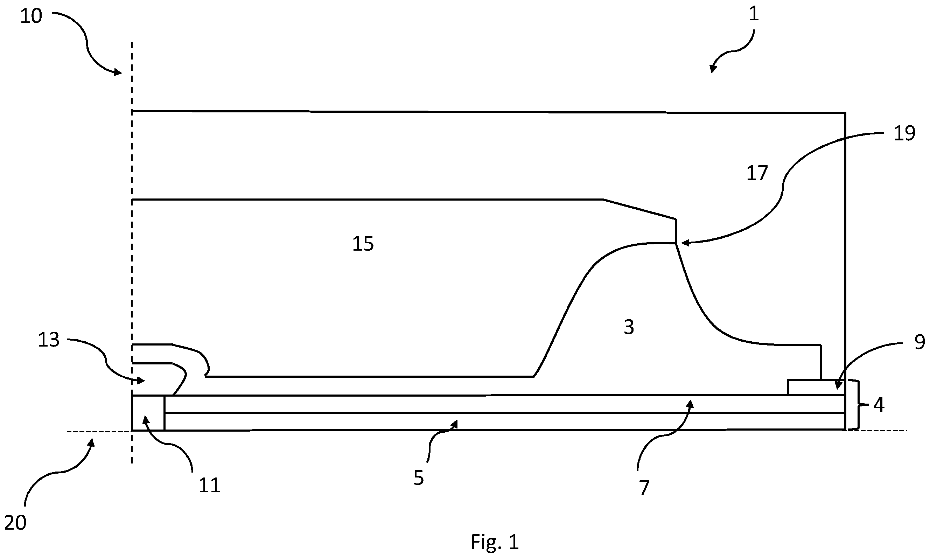

Fig. 1 is a schematic longitudinal sectional view of an installed HVDC cable joint 1 (i.e. installed with a HVDC cable on site) comprising an electric stress control layer 3. The installed HVDC cable joint 1 extends along a longitudinal symmetry axis 20.

The installed HVDC cable joint 1 comprises an HVDC cable 4 comprising a conductor 5, a cable insulation layer 7 (referred to as the insulation layer of the HVDC cable prior in this description) arranged around the conductor 5, and a semi-conductive screen 9 arranged around the cable insulation layer 7. The HVDC cable 4 extends along a longitudinal symmetry axis 20.

The semi-conductive screen 9 is typically removed from the majority of the cable 4 that is within the cable joint 1 during installation to facilitate the connection between the HVDC cable 4 and the HVDC cable joint 1.

The installed HVDC cable joint 1 may further comprise a connector 11 provided as a current connection device, and an inner deflector 13. The connector 11 is arranged to receive the connector 5 at a first end and arranged to receive another connector that is to be connected to the HVDC cable 4 at a second end. The two HVDC cables that are to be joined are hence electrically connected via the connector 11. The inner deflector 13 may be electrically connected to the conductor 5 via the connector 11. The connector 11 may be electrically conductive while the inner deflector 13 may be semi-conductive. The inner deflector 13 may comprise a TPE and preferably fillers, more preferably it comprises the same TPE as the electric stress control layer 3.

When the HVDC cable joint 1 is installed, the electric stress control layer 3 is provided around the cable insulation layer 7 and is thereby in direct contact with the cable insulation layer 7 when installed. The electric stress control layer 3 comprises a TPE.

According to Fig. 1, the electric stress control layer 3 is arranged along the cable insulation layer 7 and is at a first axial end electrically connected to the semi-conductive screen 9 of the HVDC cable 4. The semi-conductive screen 9 is terminated just after contact with the electric stress control layer 3. At the second axial end, the electric stress control layer 3 is electrically connected to the inner deflector 13 and will hereby be electrically connected to the conductor 5 of the HVDC cable.

In a direction from the first axial end towards the second axial end, the electric stress control layer 3 has a first portion followed by a second and a third portion. The first portion that has a linear geometry having a constant radial thickness, the second portion has a non-linear geometry, in which the outer radius of the electric stress control layer 3 increases non-linearly to reach a peak, at which peak the outer radius of the electric stress control layer 3 decreases non-linearly, and the third portion has a linear geometry, having a constant radial thickness. The first portion extends from the semi-conductive screen 9 and transitions into the second portion. The second portion transitions into the third portion which extend to the inner deflector 13. The non-linear geometry may be in the shape of a stress cone. The geometry of the electric stress control layer 3 further aids in the control of the electric field.

The HVDC cable joint 1 may comprise an insulation layer 15 which may be arranged around the electric stress control layer 3 and extends along the longitudinal axis 20, preferably starting at the peak of the second portion of the electric stress control layer 3. The insulation layer 15 may have a tapered geometry in an axial direction from the third portion towards the second and first portion of the electric stress control layer 3. The insulation layer 15 may comprise a TPE, preferably the same TPE as the electric stress control layer 3.

The HVDC cable joint 1 may further comprise a semi-conductive layer 17 which extends along the longitudinal axis and is arranged around the joint insulation layer 15 and around the electric stress control layer 3. Thus, the semi-conductive layer 17 covers both the electric stress control layer 3 and the insulation layer 15. Hereby, an outer triple point 19 may be defined at the intersection of the electric stress control layer 3, the joint insulation layer 15, and the semi-conductive layer 17. At one end, the semi-conductive layer 17 is in contact with the semi-conductive screen 9 of the HVDC cable 4. The semi-conductive layer 17 may comprise a TPE, preferably the same TPE as the electric stress control layer 3.

The HVDC cable 4 and the HVDC cable joint 1 may be cylinder symmetrical devices with the rotational symmetry axis 20. Each of the components of the HVDC cable 4 and the cable joint 1 are rotationally symmetric around the longitudinal symmetry axis 20.

Furthermore, there is a mirror symmetry plane 10 in a radial direction in which the components of the HVDC cable 4 and the HVDC cable joint 1 are mirrored to obtain the second HVDC cable connected to the HVDC cable 4, and the second part of the HVDC cable joint.

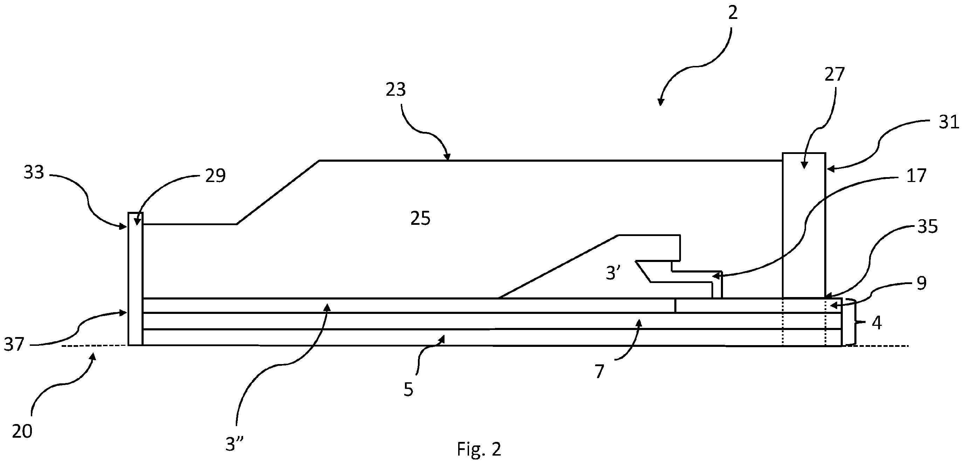

Fig. 2 is a schematic longitudinal sectional view of an installed HVDC cable termination 2 (i.e. installed HVDC cable system with an HVDC cable) comprising an electric stress control layer 3.

The HVDC cable termination 2 comprises an outer housing 23 comprising a tubular outer shell with an inner periphery, the outer shell having a longitudinal axis 20.

The HVDC cable termination 2 comprises an HVDC cable 4 comprising a conductor 5, a cable insulation layer 7 arranged around the conductor, and a semi-conductive screen 9 arranged around the cable insulation layer 7. The HVDC cable 4 extends within the outer housing 23 of the HVDC cable termination 2, along the longitudinal axis 20.

The semi-conductive screen 9 is typically removed from the majority of the cable that extends within the HVDC cable termination 2 during installation to facilitate the connection between the HVDC cable 4 and the HVDC cable termination 2.

The electric stress control layer 3 comprises a stress cone 3' and an FGM layer 3". The FGM layer 3" is arranged around the cable insulation layer 7 when the HVDC cable termination 2 is installed. The FGM layer 3" is, at one end, electrically connected to the semi-conductive screen 9 and extends along the longitudinal axis 20. Preferably, the semi-conductive screen 9 is terminated just as the FGM layer 3" begins. The FGM layer 3" comprises a TPE.

When the HVDC cable termination 2 is installed, the stress cone 3' is at one end electrically connected to the semi-conductive screen 9 and thereafter arranged around the FGM layer 3". The stress cone 3' is thereby in contact with the cable insulation layer 7 via the FGM layer 3" when installed and an interface between the electric stress control layer 3, via the FGM layer 3", and the cable insulation layer 7 is formed.

The stress cone 3' comprises the same TPE as the FGM layer 3". The stress cone 3' and the FGM layer 3" may comprise the TPE and fillers, i.e., the stress cone 3' and the FGM layer 3" may have the same composition. The stress cone 3' extends in the longitudinal axis 20 to cover part of the HVDC cable 4 within the outer housing 23.

The HVDC cable termination 2 may further comprise a semi-conductive layer 17 partially arranged around the stress cone 3'. At one end the semi-conductive layer 17 is connected to the semi-conductive screen 9. The semi-conductive layer 17 may comprise a TPE and preferably fillers.

A space 25 may be provided along the longitudinal axis 20 between the inner periphery of the outer housing 23 and the electric stress control layer 3, the semi-conductive screen 9 or the semi-conductive layer 17. The space 25 is preferably filled with an electrically insulating fluid.

The outer housing 23 further comprises a first flange 27, preferably made of a metal, at the first end portion 31 of the outer housing 23, and a second flange 29, preferably made of a metal, at the second end portion 33 of the outer housing 23. The HVDC cable 4 enters the outer housing via a first opening 35 in the first flange 27 and exits the outer housing 23 via a second opening 37 that may be provided in the second flange 29.

The HVDC cable 4 and the HVDC cable termination 2 may be cylinder symmetrical devices with the rotational symmetry axis 20. Each of the components of the HVDC cable 4 and the HVDC cable termination 2 are rotation symmetric around the longitudinal symmetry axis 20.

While various aspects and embodiments have been disclosed herein, other aspects and embodiments will be apparent to those skilled in the art. The various aspects and embodiments disclosed herein are for purposes of illustration and are not intended to be limiting, with the scope being defined by the following claims.

## Claims

1. A high voltage direct current, HVDC, cable accessory (1, 2) comprising an electric stress control layer (3) which at one position is adapted to be connected to an HVDC cable (4) and wherein the electric stress control layer (3) comprises a thermoplastic elastomer.

2. The HVDC cable accessory (1, 2) according to claim 1, wherein the HVDC cable accessory (1, 2) is prefabricated.

3. The HVDC cable accessory (1, 2) according to any one of the preceding claims, wherein the electric stress control layer (3) comprises a stress cone.

4. The HVDC cable accessory (1, 2) according to any one of the preceding claims, wherein the HVDC cable accessory (1, 2) is a cable joint (1) or a cable termination (2).

5. The HVDC cable accessory (1, 2) according to any one of the preceding claims wherein the electric stress control layer (3) comprises at least 80 wt.% of the thermoplastic elastomer based on the total dry weight of the electric stress control layer (3).

6. The HVDC cable accessory (1, 2) according to any one of the preceding claims wherein the thermoplastic elastomer has a peak melting point in the range of from 100-180 °C as determined according to ISO 11357-1:2023 and/or a melt index in the range of 0.05-30 g/10 min, when measured with 5 kg at 190 °C and determined according to ASTM D1238-23a.

7. The HVDC cable accessory (1, 2) according to any one of the preceding claims wherein the thermoplastic elastomer is an olefin copolymer, preferably an olefin block copolymer.

8. The HVDC cable accessory (1, 2) according to claim 7, wherein the olefin copolymer is an ethylene copolymer, preferably an ethylene block copolymer.

9. The HVDC cable accessory (1, 2) according to claim 8, wherein the ethylene copolymer is an ethylene/1-olefin copolymer, preferably an ethylene/1-olefin block copolymer.

10. The HVDC cable accessory (1, 2) according to claim 9, wherein the ethylene/1-olefin copolymer is an ethylene/1-octene copolymer, preferably an ethylene/1-octene block copolymer.

11. The HVDC cable accessory (1, 2) according to any one of the preceding claims wherein the electric stress control layer (3) comprises at least one field grading material layer (3") comprising the thermoplastic elastomer, which field grading material layer, at one position, is adapted to be connected to an HVDC cable (4).

12. An HVDC cable system comprising:
- at least one HVDC cable (4) comprising a conductor (5) and an insulation layer (7) arranged around the conductor (5); and
- an HVDC cable accessory (1, 2) according to any one of the preceding claims;
wherein the electric stress control layer (3) at one position is in direct contact with the insulation layer (7) of the HVDC cable (4).

13. A method for installing an HVDC cable system, comprising the steps of:
a) providing at least one HVDC cable (4) comprising a conductor (5) and an insulation layer (7) arranged around the conductor (5);
b) providing an HVDC cable accessory (1, 2) according to any one of claims 1-11;
c) joining the HVDC cable (4) and the HVDC cable accessory (1, 2) wherein the electric stress control layer (3) is in direct contact in at least one position with the insulation layer (7) of the HVDC cable (4) and an interface between the insulation layer (7) of the HVDC cable (4) and the electric stress control layer (3) is obtained; and
d) heating the interface between the insulation layer (7) of the HVDC cable (4) and the electric stress control layer (3) to obtain a melted interface.

14. The method according to claim 13, wherein the HVDC cable (4) further comprises a semi-conductive screen (9) which is removed from the HVDC cable (4) prior to step c), in at least the position where the electric stress control layer (3) is in direct contact with the insulation layer (7) of the HVDC cable (4).

15. The method according to claims 13-14, wherein the heating is provided by induction heating and/or heatmaps.
